# EUROPEAN PATENT SPECIFICATION

(11) **EP 4 311 963 B1**
(45) Date of publication and mention of the grant of the patent: **30.04.2025**
(21) Application number: 23160816.7
(22) Date of filing: 08.03.2023
(51) Int. Cl.: F16K 27/02, F16K 31/06, F16K 37/00, F16K 39/02

(54) **TWO-WAY SOLENOID VALVE WITH THREE PORTS**
ZWEI-WEGE-MAGNETVENTIL MIT DREI ANSCHLÜSSEN
ÉLECTROVANNE BIDIRECTIONNELLE À TROIS ORIFICES

(30) Priority: 29.07.2022 ES 202231270 U
(43) Date of publication of application: 31.01.2024
(73) Proprietor: Bitron Industrie Espana, S.a.u, 08930 Sant Adria de Besos (Barcelona) (ES)
(72) Inventor: Garuz Rodes, Joaquin, 08930 SANT ADRIA DE BESOS (BARCELONA) (ES); Fernández Quirós, Francisco Javier, 08930 SANT ADRIA DE BESOS (BARCELONA) (ES)
(74) Representative: Isern Patentes y Marcas S.L.

(56) References cited:
- EP-B1- 2 004 428
- EP-B1- 2 381 146
- DE-B- 1 037 788
- US-A- 3 038 499
- US-A1- 2017 146 149
- US-A1- 2019 250 645

## Description

### OBJECT OF THE INVENTION

The object of the present invention is to provide a solenoid valve with three ports intended to regulate a flow of fluid, preferably water.

More specifically, the invention proposes the development of a two-way solenoid valve with three ports intended to channel a water flow that is part of a cooling circuit of a conventional vehicle combustion engine through one of the two outlet ports of the solenoid valve, which provides improvements in terms of hydraulic and functional performance.

### BACKGROUND OF THE INVENTION

At present, it is well known that manufacturers of vehicle combustion engines currently seek to reduce fuel consumption to be more efficient, but without entailing an increase in manufacturing costs. One of the essential elements involved in the operation are valves that operate on the cooling circuit.

One type of valve used in cooling systems comprises a fixed core housed inside an outer casing and a movable core that can be axially displaced through a hole relative to said fixed core by the action of a force generated by a magnetic field of a coil, where a drive shaft linked to the movable core is also provided, which drive shaft has sealing means at one end that act to allow their fluid communication. However, it has been detected that they still have electrical consumption that can be reduced, this feature being linked to the polluting emissions generated by vehicles. Another detected aspect to be improved is that related to the amount of coil material to be required, used to generate the magnetic field that acts on the movable core, which entails a higher manufacturing cost of the solenoid valve, as well as a larger size of the assembly, which can make its placement or design difficult.

It is known from prior art document EP 2381146 disclosing a two-way solenoid valve with three ports provided with a pressure compensation system, in which common features are part of the preamble of the claim 1.

Also, it is known DE 1037788 disclosing a two-way solenoid valve with three ports devoid of a control board to govern the magnetic field.

Therefore, there is still a need for a suitable solenoid valve for cooling circuits that is part of combustion or fully electric engines that can withstand high pressure values and allows operating in two directions according to the needs or operating requirements of the solenoid valve.

Furthermore, the applicant is currently unaware of an invention that has all the features described in this specification.

### DESCRIPTION OF THE INVENTION

The present invention has been developed with the aim of providing a solenoid valve which is configured as a novelty within the field of application and solves the aforementioned drawbacks, further contributing other additional advantages that will be obvious from the description below.

An object of the present invention is to therefore provide a two-way solenoid valve with three ports, intended to regulate the passage of a fluid flow between a first inlet in the direction of a second outlet and/or a third outlet, said solenoid valve comprising a fixed core housed inside an outer casing and a movable core that can be axially displaced through a hole relative to said fixed core by the action of a force generated by a magnetic field, in which a drive shaft linked to the movable core is also provided, which drive shaft has sealing means at one end that act on the inlet and/or outlets to allow their fluid communication, the magnetic field being governed by a control board.

Particularly, the invention is characterised in that it includes a pressure compensation system that links the pressure value at the first inlet and the pressure value at the second and third outlets, the pressure compensation system being associated with the displacement of the drive shaft, such that in a first operating OFF condition of the current supply for generating the magnetic field, the first inlet (1) and the third outlet (3) are in fluid communication, while in a second operating ON condition where there is a current supply for generating the magnetic field to displace the movable core (6), the first inlet (1) and the second are in fluid communication so that the pressure value of the second outlet being equal to the pressure value of the first inlet (1) and the pressure present in the third outlet (3) and the compensating chamber (16) is the same,

Due to these features, a solenoid valve that is part of a cooling system of an internal combustion or electric vehicle is obtained, which provides improvements related to hydraulic and functional performance, as well as a reduction in electrical consumption by requiring fewer materials for the manufacture of the coil, due to the internal design of the solenoid valve. Consequently, this reduction in electrical consumption allows the fuel consumption of the combustion engine to be reduced.

This solenoid valve therefore allows reducing emissions from vehicles with combustion engines, said solenoid valve being especially suitable for vehicles that use combustion engines combined with electric motors, commonly known as hybrid vehicles, or vehicles with all-electric operation.
according to the invention, the aforementioned pressure compensation system comprises a first passage that runs in the longitudinal direction that connects the third outlet with a compensating airtight chamber, the compensating chamber being in fluid communication with the second outlet through of an orifice that can be sealed by means of a sealing gasket.

In particular, the invention comprises an elastic return system for the drive shaft that is comprised of a main elastic element and a secondary elastic element that are spaced apart.

Advantageously, the solenoid valve may include positioning detection means of the drive shaft, so that the real position of the shaft can be known at all times and ensure correct operation.

Preferably, said positioning detection means of the drive shaft comprise a Hall sensor located on the control board that detects the position of a magnet coupled to one end of the drive shaft.

According to another aspect of the invention, the drive shaft comprises three parts that are aligned and coupled to each other, being:
a first end portion coupled to the movable core;
a second intermediate portion coupled with the first portion, being provided with a sealing gasket that acts on the compensating chamber, and in which the main elastic element is coupled; and
a third end portion coupled with the second intermediate portion, which is provided with the sealing means.

Also advantageously, the second outlet and/or third outlet includes a particle retention filter, so as to prevent undesirable particles from circulating through the conduits couplable to the first inlet and the two outlets, since it must be taken into account that this arrangement allows operating in two directions and not only in one direction.

Thus, the solenoid valve described represents an innovative structure with structural and constituent features heretofore unknown for its intended purpose, reasons which, taken together with its usefulness, provide it with sufficient grounds for obtaining the requested exclusivity privilege.

Other features and advantages of the solenoid valve object of the present invention will become apparent from the description of a preferred but not exclusive embodiment illustrated by way of non-limiting example in the attached drawings, in which:

### BRIEF DESCRIPTION OF THE DRAWINGS

Figure 1 is a perspective view of an embodiment of the two-way solenoid valve with three ports according to the present invention;
Figure 2 is a sectional elevation view of the two-way solenoid valve in an first operating condition;
Figure 3 is a sectional elevation view of the two-way solenoid valve in a second operating condition;
Figure 4 is a sectional elevation view of the two-way solenoid valve in a transitional condition, in other words, the moment of time that occurs when the circulation is prevented in the third outlet; and

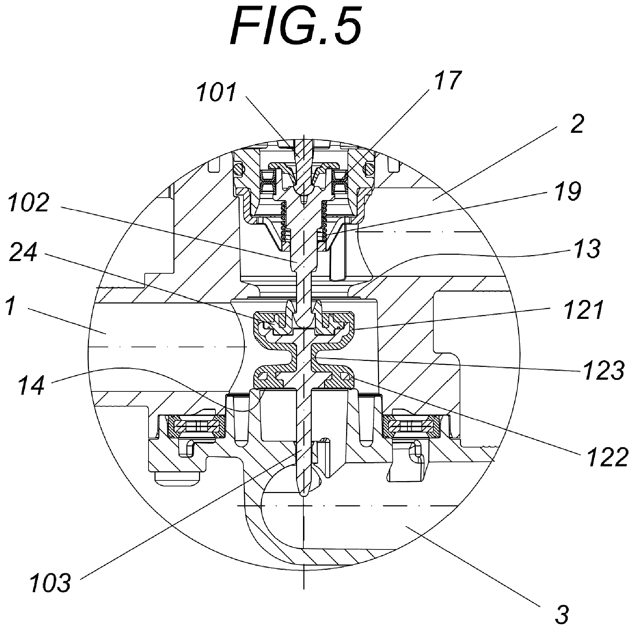

Figure 5 is a sectional elevation detail view of the area of the solenoid valve where the sealing means are present.

### DESCRIPTION OF A PREFERRED EMBODIMENT

In view of the aforementioned figures, and in accordance with the adopted numbering, one may observe therein a preferred exemplary embodiment of the invention, which comprises the parts and elements indicated and described in detail below.

Moreover, the terms first, second, third, and the like in the description and in the claims are used to distinguish between similar elements and not necessarily to describe a sequential or chronological order. The terms may be interchanged under appropriate circumstances and the embodiments of the invention may operate in sequences other than those described or illustrated herein.

Moreover, the terms upper, lower, up, down, and the like in the description and in the claims are used for descriptive purposes and not necessarily to describe relative positions.

According to an embodiment of the solenoid valve of the invention intended to regulate the passage of a fluid flow between a first inlet (1) in the direction of a second outlet (2) and/or a third outlet (3), said solenoid valve comprises a fixed core (4) housed inside an outer casing (5) or also called a hydraulic body herein, made of any suitable material, and a movable core (6) made of ferromagnetic material that can be axially displaced, relative to said fixed core (4), a predetermined stroke through a hole by the action of a force generated by a magnetic field. The movable core is fixed to a drive shaft, generally indicated by the reference (10), provided with the sealing means that will be described in detail later.

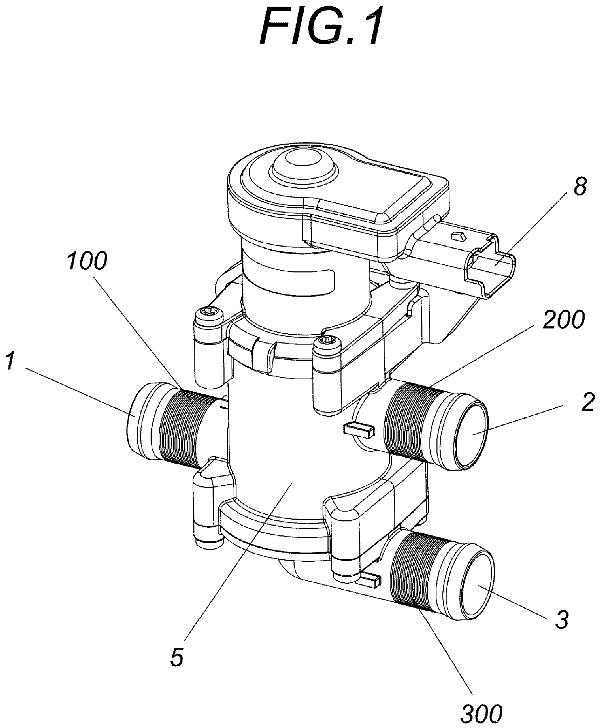

It should be mentioned that the first inlet (1), the second outlet (2) and the third outlet (3) are formed by internally hollow extensions that protrude perpendicularly with respect to the outer casing (5), as shown in Figure 1. Additionally, the outer surface of the first inlet (1), the second outlet (2) and the third outlet (3) have a raised region (100, 200, 300) that helps keep the corresponding conduits (not shown) coupled in said first inlet (1), second outlet (2) and third outlet (3).

This magnetic field is created by a coil (7) connected to an external power supply by means of a connection terminal (8) associated with the control board (11) located in the upper portion. Said coil (7) is located in a coil core (9). It should be noted that the control board or PCB (11) has a regulating system via a software program configured to regulate the current applied to the coil (7), in such a way that it applies a high starting current (until the magnetic stroke is completed with maximum force), and then reducing the current to a lower value to maintain the ON status of the solenoid valve. This regulating system makes it possible to reduce the energy consumption drawn from a battery present in the vehicle (not shown) and also to reduce the temperature generated by the coil during the second operating condition of the solenoid valve. Likewise, it is also envisaged that the software program maintains the activation current regardless of the ambient temperature existing around the solenoid valve and the voltage received.

More precisely, the sealing means comprise a sealing element (12) formed by a substantially I-shaped cross section, such that it has a first discoidal region (121) with a closing surface facing a seat (13) associated with the second outlet and a second discoidal region (122) with a closing surface facing a seat (14) associated with the third outlet (3), the first and second discoidal regions being joined together by an intermediate segment (123) with a smaller diameter than the first and second closing surfaces. Said sealing element (12) is fixed to a portion of the shaft (10) by means of a clamping member (24) that is coupled to it by means of a clipping connection.

To reduce the energy required to displace the drive shaft, a pressure compensation system is provided that links the pressure value at the first inlet (1) and the pressure value at the second and third outlets (2, 3), the pressure compensation system being associated with the movement of the drive shaft (10).

In particular reference to the pressure compensation system, it comprises a first passage (15) (indicated by dashed lines) that connects the third outlet with a compensating airtight chamber (16), the compensating chamber (16) being in fluid communication with the second outlet through an orifice that can be sealed by means of a sealing gasket (17) fixed to the drive shaft (10).

Additionally, in order for the drive shaft (10) to return to its position easily and quickly, it comprises an elastic return system for the drive shaft that is comprised of a main elastic element (18) and a secondary elastic element (19) that are spaced apart. Said two main (18) and secondary (19) elastic elements each consist of helical springs.

Additionally, the solenoid valve is provided with positioning detection means of the drive shaft (10). Such positioning detection means of the drive shaft (10) comprise a Hall sensor (20) located on the control board or PCB (11) that detects the position of a magnet (21) coupled to one end of the drive shaft (10).

Now, returning to the drive shaft (10), it comprises three parts that are aligned and coupled to each other, which are described as follows:
A first end portion (101) coupled to the movable core and partially housing the secondary elastic element (19); a second intermediate portion (102) coupled with the first end portion (101), being provided with a pair of sealing gaskets (17) that act on the compensating chamber (16), and in which the main elastic element (18) is coupled; and a third end portion (103) coupled with the second intermediate portion (102), which is provided with the aforementioned sealing element (12).

Both the second outlet (2) and the third outlet (3) include a particle retention filter (22).

On the other hand, in order for the coil (7) to be completely isolated from possible liquid leakage from the fluid flow path area, a protective cap (23) is provided internally that isolates not only the coil (7) but also the electronic portion of the solenoid valve, ensuring that no contact with liquid occurs.

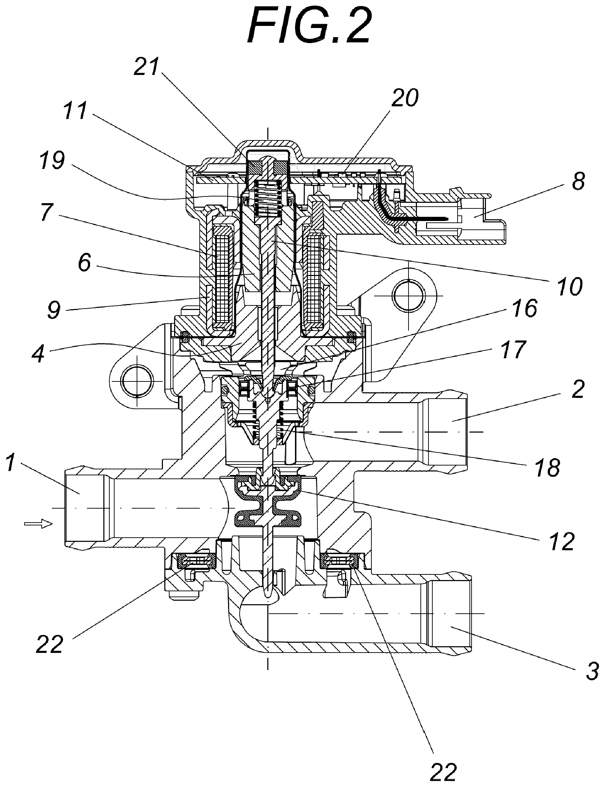

The operation of the solenoid valve described above is explained as follows:
When the solenoid valve is in the OFF position (see Figure 2), the main and secondary elastic elements (18 and 19) are in a rest position, the first discoidal region (121) of the sealing element (12) being in contact with the seat (13), so that the inlet (1) and the third outlet (3) are in fluid communication. In this first operating position, the pressure value of the second outlet (2) is in balance of pressures with the inlet (1) and the outlet (3), the pressure value of the inlet (1) being the same as the pressure value of the outlet (3), since the compensating chamber (16) is filled with the liquid that passed through the first passage (15).

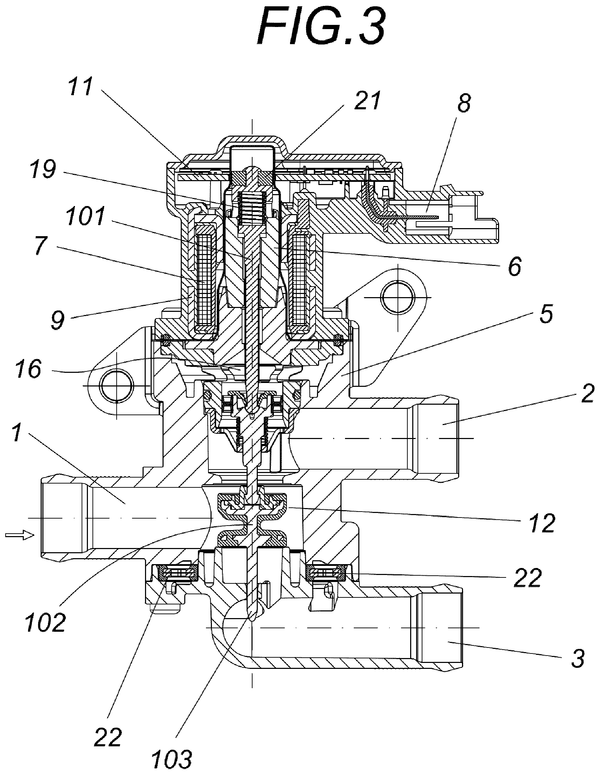

On the other hand, when the solenoid valve is in the transitional position (see Figure 3), in other words, in the intermediate position to go from the first operating condition to the second operating position, which also corresponds to the moment of time that occurs when the passage of the water flow to the third outlet is blocked, the movable core (6) is moved jointly with the drive shaft (10) a stroke without even abutting the upper portion of the fixed core (4). The main elastic element (18) is compressed while the secondary elastic element (19) remains at rest. In turn, the stroke that the movable core (6) made is such that the second discoidal region (122) is abutting the seat (14) associated with the third outlet (3). Due to the configuration of this transitional stage, the required activation current is reduced after 100 milliseconds.

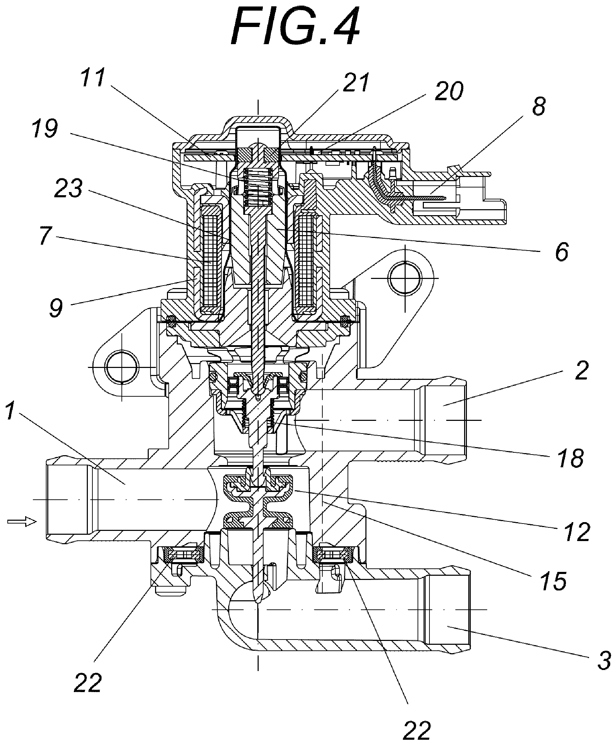

When the solenoid valve is in the second operating position (see Figure 4), the second discoidal region (122) is kept abutting the seat (14) while the movable core (6) continues to move forward until it abuts the fixed core (4), thereby compressing the secondary elastic element (19). It should be mentioned that the secondary elastic element (19) must have more elastic force than the main elastic element (18) to prevent the sealing element (12) from moving in an undesired manner. In this second operating position, the pressure value of the second outlet is in balance of forces with the pressure value of the third outlet (3), the pressure value of the second outlet being equal to the pressure value of the first inlet (1).

The details, shapes, dimensions and other secondary elements, used to manufacture the solenoid valve of the invention, may be suitably replaced with others that do not depart from the scope defined by the claims included below.

### List of main references

- 1.: First inlet
- 2.: Second outlet
- 3.: Third outlet
- 4.: Fixed core
- 5.: Outer case
- 6.: Movable core
- 7.: coil
- 8.: connection terminal
- 9.: coil core
- 10.: drive shaft
- 11.: PCB control board
- 12.: sealing element
- 13.: seat
- 14.: seat
- 15.: first passage
- 16.: compensating chamber
- 17.: sealing gaskets
- 18.: main elastic element
- 19.: secondary elastic element
- 20.: Hall sensor
- 21.: magnet
- 22.: retention filter
- 23.: Protective cap
- 24.: clamping member

## Claims

1. A two-way solenoid valve with three ports, intended to regulate the passage of a fluid flow between a first inlet (1) in the direction of a second outlet (2) and/or a third outlet, (3) comprising a fixed core (4) housed inside an outer casing (5) and a movable core (6) that can be axially displaced through a hole relative to said fixed core by the action of a force generated by a magnetic field, in which a drive shaft (10) linked to the movable core (6) is also provided, which drive shaft (10) has sealing means at one end that act on the first inlet and/or second and third outlets to allow their fluid communication, the magnetic field being governed by a control board (11), wherein it includes a pressure compensation system that links the pressure value at the first inlet (1) and the pressure value at the second and third outlets (2) and (3), the pressure compensation system being associated with the displacement of the drive shaft (10), and the sealing means comprise a sealing element (12) wherein in a first operating OFF condition of a current supply for generating the magnetic field, the first inlet (1) and the third outlet (3) are in fluid communication, while in a second operating ON condition where there is a current supply for generating the magnetic field to displace the movable core (6), the first inlet (1) and the second outlet (2) are in fluid communication so that the pressure value of the second outlet (2) is equal to the pressure value of the first inlet (1) and the pressure present in the third outlet (3) and a compensating chamber (16) is the same,
wherein the pressure compensation system comprises a first passage (15) that connects the third outlet (3) with the compensating airtight chamber, (16) the compensating chamber (16) being in fluid communication with the second outlet (2) through an orifice that can be sealed by means of sealing gaskets (17);
**characterised in that** the pressure compensation system comprises an elastic return system for the drive shaft (10), comprising a main elastic element (18) and a secondary elastic element (19) that are spaced apart, and **in that** the secondary elastic element (19) has more elastic force than the main elastic element (18) so that movement of the sealing element (12) is prevented in such second operating condition where the pressure value of the second outlet (2) is in balance of forces with the pressure value of the third outlet (3), the pressure value of the second outlet being equal to the pressure value of the first inlet (1).

2. The solenoid valve according to any of the preceding claims, **characterised in that** it includes positioning detection means of the drive shaft (10).

3. The solenoid valve according to claim 2, **characterised in that** the positioning detection means of the drive shaft (10) comprise a Hall sensor (20) located on the control board (11) that detects the position of a magnet coupled to one end of the drive shaft (10).

4. The solenoid valve according to any of the preceding claims, **characterised in that** the drive shaft (10) comprises three parts that are aligned and coupled to each other, being:
a first end portion (101) coupled to the movable core (6);
a second intermediate portion (102) coupled with the first end portion, (101) being provided with sealing gaskets (17) that acts on the compensating chamber, and in which the main elastic element (18) is coupled; and
a third end portion (103) coupled with the second intermediate portion, (102) which is provided with the sealing means.

5. The solenoid valve according to any of the preceding claims, **characterised in that** the second outlet (2) and/or third outlet (3) includes a particle retention filter (22).

6. The solenoid valve according to any of the preceding claims, **characterised in that** the sealing means comprise the sealing element (12) formed by a substantially I-shaped cross section, such that it has a first discoidal region (121) with a closing surface facing a seat associated with the second outlet (2) and a second discoidal region (122) with a closing surface facing a seat associated with the third outlet (3), the first and second discoidal regions being joined together by an intermediate segment (123) with a smaller diameter than the first and second closing surfaces.

7. The solenoid valve according to any of the preceding claims, **characterised in that** the control board (11) has a software program configured to regulate the current applied to the coil (7), in such a way that the electric current value may vary in the ON condition.

## Patentansprüche

1. Zweiwege-Magnetventil mit drei Anschlüssen, das dazu bestimmt ist, den Durchlass eines Fluidstroms zwischen einem ersten Einlass (1) in Richtung eines zweiten Auslasses (2) und/oder eines dritten Auslasses (3) zu regeln, mit einem festen Kern (4), der in einem Außengehäuse (5) aufgenommen ist, und einem beweglichen Kern (6), der durch ein Loch relativ zu dem genannten festen Kern durch die Wirkung einer durch ein Magnetfeld erzeugten Kraft axial verschoben werden kann, in dem auch eine mit dem genannten beweglichen Kern (6) verbundene Antriebswelle (10) vorgesehen ist, wobei diese Antriebswelle (10) an einem Ende Dichtungsmittel aufweist, die auf den ersten Einlass und/oder den zweiten und dritten Auslass einwirken, um deren Fluidverbindung zu ermöglichen, wobei das Magnetfeld von einer Steuertafel (11) gesteuert wird, wobei ein Druckausgleichssystem enthalten ist, das den Druckwert am ersten Einlass (1) und den Druckwert am zweiten und dritten Auslass (2) und (3) miteinander verknüpft, wobei das Druckausgleichssystem der Verschiebung der Antriebswelle (10) zugeordnet ist, und die Dichtungsmittel ein Dichtungselement (12) umfassen, wobei in einem ersten Betriebszustand AUS einer Stromzufuhr zur Erzeugung des Magnetfeldes der erste Einlass (1) und der dritte Auslass (3) in Fluidverbindung stehen, während in einem zweiten Betriebszustand EIN, in dem eine Stromzufuhr zur Erzeugung des Magnetfeldes vorhanden ist, um den beweglichen Kern (6) zu verschieben, der erste Einlass (1) und der zweite Auslass (2) in Fluidverbindung stehen, so dass der Druckwert des zweiten Auslasses (2) gleich dem Druckwert des ersten Einlasses (1) ist und der im dritten Auslass (3) und einer Ausgleichskammer (16) vorliegende Druck gleich ist,
wobei das Druckausgleichssystem einen ersten Durchlass (15) umfasst, der den dritten Auslass (3) mit der luftdichten Ausgleichskammer (16) verbindet, wobei die Ausgleichskammer (16) mit dem zweiten Auslass (2) in Fluidverbindung steht, über eine Öffnung, die mit Hilfe von Dichtungsringen (17) abgedichtet werden kann;
**dadurch gekennzeichnet, dass** das Druckausgleichssystem ein elastisches Rückstellsystem für die Antriebswelle (10) umfasst, das ein elastisches Hauptelement (18) und ein elastisches Sekundärelement (19) umfasst, die voneinander beabstandet sind, und dadurch dass das elastische Sekundärelement (19) eine größere elastische Kraft als das elastische Hauptelement (18) aufweist, so dass eine Bewegung des Dichtungselements (12) in einem solchen zweiten Betriebszustand verhindert wird, in dem der Druckwert des zweiten Auslasses (2) im Kräftegleichgewicht mit dem Druckwert des dritten Auslasses (3) steht, wobei der Druckwert des zweiten Auslasses gleich dem Druckwert des ersten Einlasses (1) ist.

2. Magnetventil nach einem der vorhergehenden Ansprüche, **dadurch gekennzeichnet, dass** es Mittel zur Erkennung der Positionierung der Antriebswelle (10) umfasst.

3. Magnetventil nach Anspruch 2, **dadurch gekennzeichnet, dass** die Mittel zur Erkennung der Positionierung der Antriebswelle (10) einen Hall-Sensor (20) umfassen, der sich auf der Steuertafel (11) befindet und die Position eines mit einem Ende der Antriebswelle (10) gekoppelten Magneten erkennt.

4. Magnetventil nach einem der vorhergehenden Ansprüche, **dadurch gekennzeichnet, dass** die Antriebswelle (10) aus drei Teilen besteht, die zueinander ausgerichtet und miteinander gekoppelt sind, nämlich:
einem ersten Endabschnitt (101), der mit dem beweglichen Kern (6) gekoppelt ist;
einem zweiten Zwischenabschnitt (102), der mit dem ersten Endabschnitt (101) gekoppelt ist und mit Dichtungsringen (17) versehen ist, der auf die Ausgleichskammer wirkt, und in dem das elastische Hauptelement (18) gekoppelt ist; und einem dritten Endabschnitt (103), der mit dem zweiten Zwischenabschnitt (102) gekoppelt ist, der mit den Dichtungsmitteln versehen ist.

5. Magnetventil nach einem der vorhergehenden Ansprüche, **dadurch gekennzeichnet, dass** der zweite Auslass (2) und/oder der dritte Auslass (3) einen Partikelrückhaltefilter (22) aufweist.

6. Magnetventil nach einem der vorhergehenden Ansprüche, **dadurch gekennzeichnet, dass** die Dichtungsmittel das Dichtungselement (12) umfassen, das durch einen im Wesentlichen I-förmigen Querschnitt gebildet ist, so dass es einen ersten scheibenförmigen Bereich (121) mit einer dem zweiten Auslass (2) zugeordneten Sitz zugewandten Schließfläche aufweist, und einen zweiten scheibenförmigen Bereich (122) mit einer dem dritten Auslass (3) zugeordneten Sitz zugewandten Schließfläche, wobei der erste und der zweite scheibenförmige Bereich durch ein Zwischensegment (123) mit einem kleineren Durchmesser als die erste und die zweite Schließfläche miteinander verbunden sind.

7. Magnetventil nach einem der vorhergehenden Ansprüche, **dadurch gekennzeichnet, dass** die Steuertafel (11) ein Softwareprogramm aufweist, das so konfiguriert ist, dass es den an die Spule (7) angelegten Strom so regelt, dass sich der elektrische Stromwert im EIN-Zustand verändern kann.

## Revendications

1. Électrovanne à deux voies avec trois orifices, destiné à réguler le passage d'un écoulement de fluide entre une première entrée (1) en direction d'une deuxième sortie (2) et/ou d'une troisième sortie, (3) comprenant un noyau fixe (4) logé à l'intérieur d'une enveloppe externe (5) et un noyau mobile (6) qui peut être déplacé axialement à travers un trou par rapport audit noyau fixe sous l'action d'une force générée par un champ magnétique, où un arbre d'entraînement (10) relié au noyau mobile (6) est également prévu, lequel arbre d'entraînement (10) a des moyens d'étanchéité au niveau d'une extrémité qui agissent sur la première entrée et/ou les deuxième et troisième sorties pour permettre leur communication fluidique, le champ magnétique étant régi par un tableau de commande (11), dans lequel il comporte un système de compensation de pression qui lie la valeur de la pression au niveau de la première entrée (1) et la valeur de la pression au niveau des deuxième et troisième sorties (2) et (3), le système de compensation de pression est associé au déplacement de l'arbre d'entraînement (10), et les moyens d'étanchéité comprennent un élément d'étanchéité (12) dans lequel dans un premier état de fonctionnement à l'arrêt d'une alimentation en courant pour la génération du champ magnétique, la première entrée (1) et la troisième sortie (3) sont en communication fluidique, dans un deuxième état de fonctionnement en marche où il y a une alimentation en courant pour la génération du champ magnétique pour déplacer le noyau mobile (6), la première entrée (1) et la deuxième sortie (2) sont en communication fluidique de sorte que la valeur de pression de la deuxième sortie (2) est égale à la valeur de pression de la première entrée (1) et que la pression présente dans la troisième sortie (3) et une chambre de compensation (16) est la même,
dans lequel le système de compensation de pression comprend un premier passage (15) qui relie la troisième sortie (3) à la chambre étanche de compensation, (16), la chambre de compensation (16) étant en communication fluidique avec la deuxième sortie (2) par le biais d'un orifice qui peut être scellé au moyen de joints d'étanchéité (17) ;
**caractérisé en ce que** le système de compensation de pression comprend un système de retour élastique pour l'arbre d'entraînement (10), comprenant un élément élastique principal (18) et un élément élastique secondaire (19) qui sont espacés, et **en ce que** l'élément élastique secondaire (19) a plus de force élastique que l'élément élastique principal (18) de sorte qu'un mouvement de l'élément d'étanchéité (12) est empêché dans ce deuxième état de fonctionnement où la valeur de pression de la deuxième sortie (2) est en équilibre de forces avec la valeur de pression de la troisième sortie (3), la valeur de pression de la deuxième sortie étant égale à la valeur de pression de la première entrée (1).

2. Électrovanne selon l'une quelconque des revendications précédentes, **caractérisé en ce qu'**il comprend des moyens de détection du positionnement de l'arbre d'entraînement (10).

3. Électrovanne selon la revendication 2, **caractérisé en ce que** les moyens de détection de positionnement de l'arbre d'entraînement (10) comprennent un capteur à effet Hall (20) situé sur la tableau de commande (11) qui détecte la position d'un aimant accouplé à une extrémité de l'arbre d'entraînement (10).

4. Électrovanne selon l'une quelconque des revendications précédentes, **caractérisé en ce que** l'arbre d'entraînement (10) comprend trois parties qui sont alignées et accouplées les unes aux autres, étant :
une première partie d'extrémité (101) accouplée au noyau mobile (6) ;
une deuxième partie intermédiaire (102) accouplée à la première partie d'extrémité, (101) étant pourvue de joints d'étanchéité (17) qui agit sur la chambre de compensation, et où l'élément élastique principal (18) est accouplé ; et
une troisième partie d'extrémité (103) accouplée à la deuxième partie intermédiaire, (102) qui est pourvue des moyens d'étanchéité.

5. Électrovanne selon l'une quelconque des revendications précédentes, **caractérisé en ce que** la deuxième sortie (2) et/ou la troisième sortie (3) comporte un filtre de rétention des particules (22).

6. Électrovanne selon l'une quelconque des revendications précédentes, **caractérisé en ce que** les moyens d'étanchéité comprennent l'élément d'étanchéité (12) formé d'une section transversale sensiblement en forme de I, de telle sorte qu'il présente une première région discoïdale (121) avec une surface de fermeture faisant face vers un siège associé à la deuxième sortie (2) et une deuxième région discoïdale (122) avec une surface de fermeture faisant face à un siège associé à la troisième sortie (3), les première et deuxième régions discoïdales étant jointes entre elles par un segment intermédiaire (123) avec un diamètre inférieur à celui des première et deuxième surfaces de fermeture.

7. Électrovanne selon l'une quelconque des revendications précédentes, **caractérisé en ce que** la carte de commande (11) a un logiciel configuré pour réguler le courant appliqué à la bobine (7), de manière à ce que la valeur de courant électrique peut varier dans l'état de marche.
